# FASCICULE DE BREVET EUROPEEN

(11) **EP 0 611 173 B1**
(45) Date de publication et mention de la délivrance du brevet: **08.04.1998**
(21) Numéro de dépôt: 94400054.6
(22) Date de dépôt: 10.01.1994
(51) Int. Cl.: B30B 9/02, C12G 1/00, B30B 9/22

(54) **Procédé de préparation du jus pour la vinification et materiel pour la mise en oeuvre dudit procédé**
Verfahren zur Gewinnung von Saft zur Weinherstellung und Vorrichtung zur Durchführung des Verfahrens
Process for extracting juice in wine making and apparatus for carrying-out the process

(30) Priorité: 08.01.1993 FR 9300153
(43) Date de publication de la demande: 17.08.1994
(73) Titulaire: ETABLISSEMENTS GREGOIRE S.A., 16100 Cognac (FR)
(72) Inventeur: Gregoire, James, F-16100 Cognac (FR)
(74) Mandataire: Pernez, Helga

(56) Documents cités:
- EP-A- 0 029 016
- AT-B- 381 721
- FR-A- 2 248 150
- FR-A- 2 300 498
- FR-A- 2 503 676
- FR-A- 2 530 424
- FR-A- 2 570 249
- US-A- 1 993 201

## Description

La présente invention se rapporte à un procédé de préparation du jus pour la vinification.

La préparation des jus en vue de la fermentation comporte dans l'état de la technique :
- une première étape de récolte des grappes de raisin à l'aide d'une ou de plusieurs machines à vendanger automotrices,
- une étape de collecte des vendanges dans une remorque mobile dont la capacité correspond à la capacité de plusieurs machines à vendanger,
- une étape de transport entre le lieu de la vendange et le chai,
- une étape de pressurage pour extraire les jus et une étape de mise en cuve de fermentation.

Entre le vignoble et le chai, les raisins subissent plusieurs opérations mécaniques de transport et de manipulations préjudiciables pour la qualité future du vin ou de l'eau de vie.

En effet, les vendanges sont d'abord stockées dans une benne à vendanges permettant le transport entre le vignoble et le chai. Les bennes à vendanges comportent habituellement un fond présentant une section en "V" dans laquelle une vis de convoyage assure le transport des raisins depuis la remorque jusqu'à un conquet de réception. Les raisins sont ensuite transportés depuis ce conquet de réception jusqu'au pressoir à l'aide d'une pompe à vendange provoquant un broyage partiel du raisin et des rafles.

Ces différentes triturations ont pour effet néfaste de produire des bourbes en quantités importantes, et de nature grossière. La présence de ces bourbes, provenant de pépins écrasés, de fragments de rafles, de fragments de pellicules plus ou moins pourris, voire de terre projetée dans la benne à vendanges par le véhicule tracteur, peut provoquer une modification du processus de fermentation qui se traduit par une augmentation de la concentration en alcools supérieure et à une réduction de la teneur en esters. En particulier, les bourbes grossières résultant des phénomènes de trituration favorisent l'apparition de précurseurs de goûts herbacés, de composés phénoliques et d'acides gras provenant des pépins écrasés, et aitèrent la colonisation bactérienne en cours de fermentation.

On a proposer dans un précédent brevet de la demanderesse, de combiner les étapes de récolte et de pressurage en équipant une machine à vendanger d'un presssoir dans lequel les raisins récoltés sont directement déversés. Toutefois, les débits des machines à vendanger, indispensables pour permettre une récolte rapide impliqueraient l'emploi d'un pressoir mobile d'une capacité excessive par rapport à l'encombrement et poids acceptables pour une utilisation dans le vignoble.

On connait également le brevet AT-B-381721 divulgant une remorque de transport de vendanges comportant une cuve rotative. Cette remorque présente l'inconvénient d'augmenter la trituration du raisin. Le brevet FR-7434579 décrit une cuve fixe recevant le raisin déchargé par une pompe à vendange. Cette cuve ne resout pas le problème visé par l'invention.

Le but de la présente invention est de proposer un procédé de préparation de jus pour la vinification permettant de réduire les phénomènes de trituration afin de produire des jus moins chargés en bourbes grossières, et permettant également de réduire l'oxydation des vendanges par une pressurage précoce et à l'abri de l'air et des pollutions extérieures.

A cet effet, l'invention concerne en premier lieu une procédé de préparation de jus pour la vinification selon la revendication 1.

Le procédé selon l'invention permet de réduire sensiblement le nombre d'opérations entraînant une trituration de la vendange. En outre, la possibilité de procéder à un pressurage au moins partiel dès la fin du chargement des raisins, pendant le transport jusqu'au chai, permet de réduire considérablement la période pendant laquelle le raisin risque de s'oxyder. Cela est particulièrement avantageux pour la vinification de cépages fragiles, tel l'UGNI BLANC dont la peau est peu épaisse et dont la récolte mécanique engendre un jus de goutte important lors de la préparation de jus pour la vinification selon les procédés connus.

selon un mode de mise en oeuvre préféré, les raisins pressés restant dans le véhicule de transport et de pressurage sont chargés dans un pressoir fixe installé dans le chai, les jus de pressurage provenant dudit pressoir fixe étant introduit dans une cuve de fermentation différente de la cuve de fermentation destinée au jus provenant du pressurage à l'aide du véhicule de transport et de pressurage.

Ce mode de réalisation permet de différencier les jus de première presse permettant d'obtenir un vin ou une eau de vie de qualité supérieure des jus de seconde presse à une pression plus importante, dont la qualité est inférieure. Cette possibilité est particulièrement adaptée lorsque les vendanges sont abondantes et excèdent les quantités fixées réglementairement pour des produits bénéficiant d'une appellation contrôlée. Les procédés selon l'état de la technique ne permettent pas d'isoler les jus en fonction de leur qualité, et de ce fait la répartition entre les jus destinés aux produits de qualité et les jus destinés à des produits secondaires sont répartis arbitrairement, au prorata des volumes réglementaires.

Avantageusement, le transport et le pressurage s'effectue dans un véhicule étanche.

On évite ainsi la pollution des vendanges par l'eau en cas de pluie, ou par la terre projetée par les roues des véhicules de transport.

De préférence, le pressurage pendant le transport s'effectue à une pression comprise entre 2.10⁴ et 6.10⁴ Pa, avantageusement de l'ordre de 4.10⁴ Pa. Cette pression permet d'obtenir des jus de qualité optimale.

L'invention concerne également un véhicule de transport et de pressurage selon la revendication 5.

Le compartiment destiné au pressurage est recouvert, après remplissage par une membrane assurant la fermeture étanche dudit compartiment.

Cette membrane permet d'exercer une pression sur les raisins chargés dans le compartiment du véhicule et d'autre part préserve les raisins de la pluie, de l'air et des salissures extérieures.

Selon un premier mode de réalisation, le véhicule selon l'invention comporte une pompe à vide pour exercer une dépression dans le compartiment destiné au recueil des jus.

Selon un deuxième mode des réalisation, le compartiment destiné au pressurage est recouvert, après remplissage, outre par ladite membrane, par une couvercle rigide, le véhicule comportant un compresseur pour insuffler de l'air comprimé entre la membrane et le couvercle rigide.

Bien entendu, ces deux modes de réalisation peuvent être combinés, le véhicule selon l'invention comportant dans ce cas des premiers moyens pour exercer une dépression dans le compartiment destiné à recevoir le jus de pressurage, et des seconds moyens pour exercer une pression complémentaire sur la membrane déformable exerçant une pression sur les raisins.

Selon une variante particulière, le couvercle rigide est mobile par basculement par rapport à l'un des bords supérieurs dudit réservoir.

De préférence, la grille de séparation est concave, vu du coté du compartiment destiné à recevoir les vendanges.

L'invention sera mieux comprise à la lecture de la description d'un exemple de réalisation non limitatif qui suit et qui fait référence aux dessins annexés où:
- la figure 1 représente une vue en coupe transversale du véhicule en position de remplissage;
- la figure 2 représente une vue en coupe transversale du véhicule en position de début de pressurage;
- la figure 3 représente une vue en coupe transversale du véhicule en fin de pressurage;
- la figure 4 représente une vue en coupe longitudinale du véhicule;

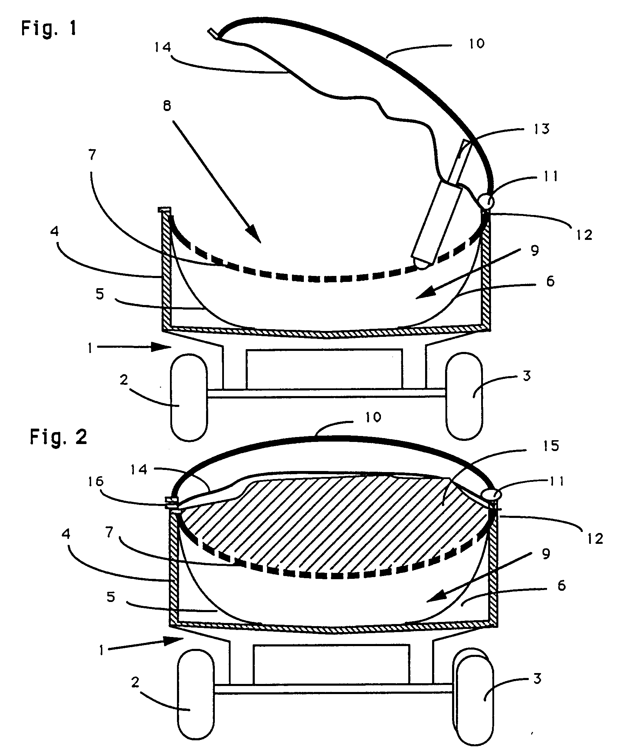

Le véhicule représenté en figure 1, 2 ou 3 comporte un châssis (1) muni de roues (2, 3). Le châssis présente à sa partie avant un timon (20) pour l'attelage à un engin tracteur.

Le châssis (1) supporte une cuve (4) en acier inoxydable, ou en acier revêtu d'époxi. Dans l'exemple décrit, cette cuve est de section rectangulaire et comporte des nervures de renforcement (5, 6) Elle peut bien entendu être réalisée sous différentes formes, par exemple sous forme de cuve à section circulaire ou elliptique.

La cuve comporte une grille perforée (7) séparant une partie supérieure (8) destinée à recevoir les vendanges et une partie inférieure (9) destinée à recevoir les jus. Cette grille (7) est de forme semi cylindrique dont la concavité est dirigée vers le compartiment supérieur (8) destiné à recevoir les vendanges.

La partie supérieure de la cuve peut être fermée par un couvercle (10) coulissant, ou basculant autour d'une charnière (11) solidaire du bord supérieur (12) de la cuve (4). Un vérin (13) assure l'ouverture et la fermeture du couvercle (10).

La partie supérieure de la cuve peut en outre être recouvert par une membrane déformable (14). Les dimensions de cette membrane (14) sont déterminées de façon à permettre la fermeture étanche de l'ouverture de remplissage du compartiment supérieur (9) destiné à recevoir les vendanges, y compris lorsque celui-ci est rempli de grappes de raisin.

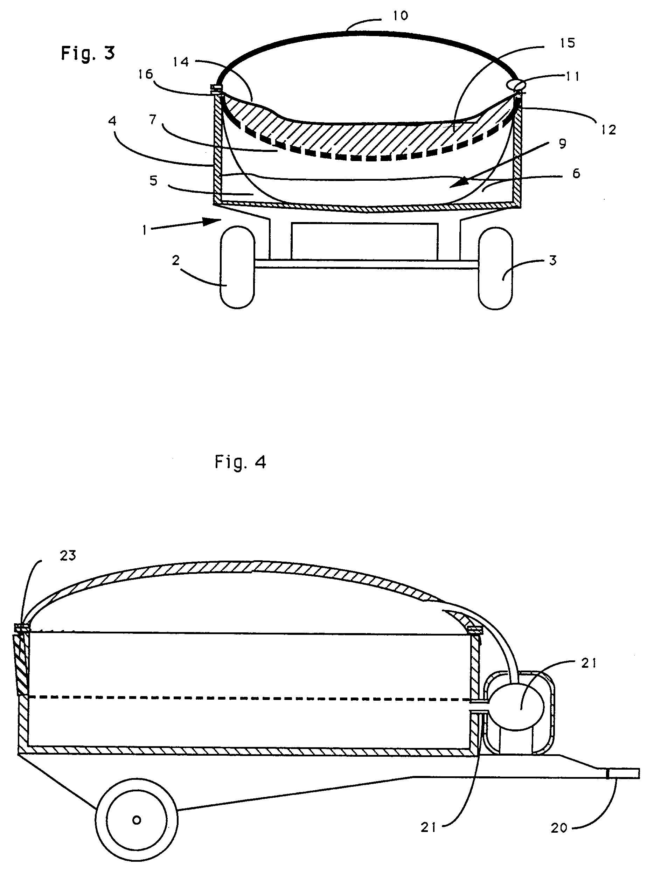

la figure 2 représente le véhicule après chargement du raisin formant une masse (15) remplissant le compartiment supérieur (9). La membrane déformable (14) recouvre le volume (15) de raisin. Un joint périphérique (16) assure l'étanchéité du compartiment supérieur (9) contenant les vendanges. Ce joint (16) est par exemple constitué par un joint torique s'étendant le long du bord supérieur de la cuve (4) d'une part et du bord inférieur du couvercle (10) d'autre part. Ce joint assure la fermeture étanche de la cuve (4). Le couvercle est verrouillé en position fermée pendant la phase de transport et de pressurage.

Le véhicule comporte par ailleurs un groupe compresseur pour la mise sous pression de la masse de raisins (15). l'air sous une pression d'environ 300 grammes par centimètres carré est injecté entre le couvercle (10) et la membrane déformable (14).

La cuve (4) communique par ailleurs avec une pompe à vide par l'intermédiaire d'un conduit (21) débouchant dans la partie le compartiment inférieur (9) destiné au recueil des jus, au dessus du niveau des jus. Cette pompe à vide exerce une dépression d'environ 3.10⁴ Pa complétant l'action de la membrane (14).

La différence de pression s'exerçant sur la masse de raisins (15) associée à l'action mécanique résultant des cahots dus au transport provoque un égouttage permettant de récupérer 70 à 80 % des jus avant même le transfert des vendanges dans le pressoir, et ce à l'abri de la pluie, de l'air et des pollutions de toute nature.

Arrivés à la cave, les jus sont pompés directement depuis le compartiment inférieur (9) dans une première cuve.

Arrivés à la cave, les jus sont pompés directement depuis le compartiment inférieur (9) dans une première cuve.

Les moûts restant dans le compartiment supérieur (9) sont transférés dans un pressoir par des moyens connus, par exemple par basculage d'une cuve (4) munie d'une trappe (23) s'ouvrant sur le compartiment supérieur (8), ou par une vis d'Archimède ou une pompe à vendanges, la trituration du moût subsistant dans le compartiment supérieur (8) ne produisant dans ce cas des effets négatifs que sur une partie des vendange pouvant être isolée et réservée à la vinification de seconde qualité.

la mise en oeuvre du véhicule est la suivante:

Le véhicule est disposé sur le vignoble, le couvercle étant en position ouverte. La machine à vendanger déverse directement les raisins dans le compartiment supérieur de la cuve. Les jus de goutte vont passer à travers au travers de la grille, pour être récupérés dans le compartiment inférieur.

Lorsque le compartiment supérieur est plein, le couvercle est abaissé et verrouillé. La membrane est ensuite mise sous pression grâce à un compresseur, éventuellement grâce au compresseur du tracteur, et la pompe à vide est mise en fonction.

Le raisin va alors être pressé pendant le transport jusqu'à la cuve de fermentation et 70 à 80 % des moûts pourront être libérés avant même le transfert de la vendange dans le pressoir, à l'abri de l'air, de l'eau et des pollutions.

Arrivé à la cave, les jus de raisins sont pompés directement dans les cuves.

La membrane sera libérée de sa pression et aspirée par la pompe à vide pour être plaquée contre le couvercle.

La vendange égouttée sera ensuite déversée par gravité dans le pressoir et aspirée par une pompe à vendange ou par basculage de la cuve grâce à une trappe ouverte auparavant.

L'invention n'est décrite dans ce qui précède qu'à titre d'exemple. Il est bien évident que l'Homme de Métier sera à même de réaliser diverses variantes. En particulier, dans le cas où le véhicule ne comporte qu'une pompe à vide, il est possible de n'assurer l'étanchéité et la fermeture du compartiment supérieur que par la membrane, le couvercle n'étant dans ce cas pas nécessaire en raison de l'absence de mise sous pression de la membrane.

## Revendications

1. Procédé de préparation de jus pour la vinification comportant une première étape de récolte de grappes de raisins à l'aide d'une ou de plusieurs machines à vendanger automotrices, une étape de collecte de vendanges dans une remorque mobile dont la capacité correspond à la capacité de plusieurs machines à vendanger, une étape de transport entre le lieu de la vendange et le chai, une étape de pressurage pour extraire les jus et une étape de mise en cuve de fermentation caractérisé en ce que le pressurage est effectué au moins partiellement pendant l'étape de transport des vendanges entre le vignoble et le chai dans un véhicule fermé, au moyen d'un véhicule comportant une partie (8) pour le stockage des raisins cette partie (8) étant recouverte après remplissage par une membrane (14) assurant la fermeture étanche de ladite partie (8), et une partie (9) pour le recueil des jus de pressurage, lesdites parties (8, 9) étant séparées par une grille, le procédé consistant en outre à déverser directement les jus de pressurage obtenus pendant l'étape de transport dans une cuve de fermentation.

2. Procédé de préparation de jus pour la vinification selon la revendication 1 caractérisé en ce que les raisins pressés restant dans le véhicule de transport et de pressurage sont chargés dans un pressoir fixe installé dans le chai, les jus de pressurage provenant dudit pressoir fixe étant introduits dans une cuve de fermentation, différente de la cuve de fermentation destinée au jus provenant du pressurage, à l'aide du véhicule de transport et de pressurage.

3. Procédé de préparation de jus pour la vinification selon l'une quelconque des revendications précédentes caractérisé en ce que le transport et le pressurage s'effectuent dans un véhicule ferme.

4. Procédé de préparation de jus pour la vinification selon l'une quelconque des revendications précédentes caractérisé en ce que le pressurage pendant le transport s'effectue à une pression comprise entre 2.10⁴ et 6.10⁴ Pa.

5. Véhicule de transport et de pressurage pour la mise en oeuvre du procédé selon l'une quelconque des revendications précédentes caractérisé en ce qu'il est constitué par un châssis à roues (2, 3) supportant un réservoir divisé en deux compartiments (8 9) séparés par une grille de séparation (7) des vendanges et des jus, le compartiment des vendanges (8) étant recouvert après remplissage par une membrane (14) assurant la fermeture étanche dudit compartiment de vendanges (8), comportant des moyens pour exercer une différence de pression d'environ 2.10⁴ et 6.10⁴ Pa entre le compartiment (8) destiné aux vendanges et le compartiment (9) destiné aux jus, et des moyens pour assurer la fermeture étanche de l'ouverture de remplissage du compartiment destiné aux vendanges.

6. Véhicule de transport et de pressurage selon la revendication 5, caractérisé en ce que le compartiment (8) destiné au pressurage des raisins est recouvert, après remplissage par une membrane (14) assurant la fermeture étanche dudit compartiment (8).

7. Véhicule de transport et de pressurage selon la revendication 6, caractérisé en ce qu'il comporte une pompe à vide pour exercer une dépression dans le compartiment (9) destiné au recueil des jus.

8. Véhicule de transport et de pressurage selon la revendication 6 ou la revendication 7, caractérisé en ce que le compartiment destiné au pressurage (8) est recouvert, après remplissage outre par ladite membrane, par un couvercle rigide et en ce qu'il comporte un compresseur pour insuffler de l'air comprimé entre la membrane (14) et le couvercle rigide.

9. Véhicule de transport et de pressurage selon la revendication 8, caractérisé en ce que le couvercle rigide est mobile par basculement par rapport à l'un des bords supérieurs dudit réservoir.

10. Véhicule de transport et de pressurage selon l'une quelconque des revendications 5 à 9 caractérisé en ce que la grille (7) de séparation est concave, vue du côté du compartiment destiné à recevoir les vendanges.

## Claims

1. Process for the preparation of juice for wine-making including a first step of vintaging bunches of grapes by means of one or more automotive gathering machines, a step of collecting grapes in a mobile trailer having a capacity corresponding to the capacities of several gathering machines, a transport step between the gathering location and the wine-making plant, a pressing step to extract the juice and a step of placing in a fermentation vat, characterised by the fact that pressing is at least partially effected during the step of transporting the grapes between the vineyard and the wine-making plant in a vehicle formed by means of a vehicle having a part (8) for the storage of the grapes this part (8) being covered after filling by a membrane (14) which effects the tight closure of the said part (8), and a part (9) for collecting the pressed juice, the said parts (8, 9) being separated by a grid, the process also consisting of discharging the pressed juice obtained during the transport step directly into a fermentation vat.

2. Process for the preparation of juice for wine-making as described in claim 1, characterised by the fact that the pressed grapes remaining in the transport and pressing vehicle are charged into a fixed press installed in the wine-making plant, the pressed juice from the said fixed press being introduced into a fermentation vat different from the fermentation vat intended for the juice from pressing by means of the transport and pressing vehicle.

3. Process for the preparation of juice for wine-making as described in either one of the preceding claims, characterised by the fact that transport and pressing are effected in a closed vehicle.

4. Process for the preparation of juice for wine-making as described in any one of the preceding claims, characterised by the fact that pressing during transport is effected at a pressure of between 2.10⁴ and 6.10⁴ Pa.

5. Transport and pressing vehicle for carrying out the process as described in any one of the preceding claims, characterised by the fact that it consists of a chassis with wheels (2, 3) supporting a tank divided into two compartments (8, 9) separated by a grid (7) for separation of the grapes and the juice, the grape compartment (8) being covered after filling by a membrane (14) which tightly closes the said grape compartment (8), including means to apply a pressure differential of approximately 2.10⁴ and 6.10⁴ Pa between the compartment (8) intended for the grapes and the compartment (9) intended for the juice, and means for tightly closing the filling opening of the compartment intended for the grapes.

6. Transport and pressing vehicle as described in claim 5, characterised by the fact that the compartment (8) intended for pressing the grapes is covered, after filling, by a membrane (14) which tightly closes the said compartment (8).

7. Transport and pressing vehicle as described in claim 6, characterised by the fact that it includes a vacuum pump to apply a reduced pressure in the compartment (9) intended to collect the juice.

8. Transport and pressing vehicle as described in claim 6 or claim 7, characterised by the fact that the compartment intended for pressing (8) is covered, after filling, as well as by the said membrane, by a rigid cover and by the fact that it includes a compressor to blow compressed air between the membrane (14) and the rigid cover.

9. Transport and pressing vehicle as described in claim 8, characterised by the fact that the rigid cover is mobile by tilting relative to one of the upper edges of the said tank.

10. Transport and pressing vehicle as described in any one of claims 5 to 9, characterised by the fact that the separation grid (7) is concave, viewed from the side of the compartment intended to receive the grapes.

## Patentansprüche

1. Verfahren zur Vorbereitung des Saftes für die Weinherstellung umfassend einen ersten Schritt der Lese von Weintrauben mit Hilfe von einer oder mehreren selbstfahrenden Weinlesemaschinen, einen Schritt des Sammelns des Leseguts in einem fahrbaren Anhänger, dessen Fassungsvermögen dem Fassungsvermögen mehrerer Weinlesemaschinen entspricht, einen Schritt des Transports zwischen dem Ort der Weinlese und dem Weinlager, dem Schritt des Auspressens des Saftes und einen Schritt des Einfüllens in den Gärbottich,
dadurch gekennzeichnet,
daß das Pressen mindestens teilweise während des Schrittes des Transports des Leseguts zwischen dem Weinberg und dem Lager in einem geschlossenen Fahrzeug durchgeführt wird mittels eines Fahrzeugs, welches eine Kammer (8) zur Aufnahme der Trauben umfaßt, welche Kammer (8) nach ihrem Befüllen von einer einen luftdichten Verschluß gewährleistenden Membran (14) abgedeckt wird, und eine Kammer (9) zum Auffangen des gepreßten Saftes, wobei beide Kammern (8, 9) durch ein Gitter getrennt sind, und wobei das Verfahren überdies darin besteht, die während des Transportschrittes gewonnenen Pressäfte unmittelbar in einen Gärbottich zu gießen.

2. Verfahren zur Vorbereitung des Saftes für die Weinherstellung gemäß Anspruch 1,
dadurch gekennzeichnet,
daß die im Transport- und Preßfahrzeug verbleibenden ausgepreßten Trauben in eine im Lager befindliche ortsfeste Presse ausgeladen werden, wobei die Pressäfte aus der ortsfesten Presse in einen anderen Gärbottich eingeführt werden als denjenigen, der für den Saft aus dem Preßvorgang mittels des Transport- und Preßfahrzeugs vorgesehen ist.

3. Verfahren zur Vorbereitung des Saftes für die Weinherstellung gemäß einem der vorangegangenen Ansprüche,
dadurch gekennzeichnet,
daß Transport und Pressen in einem geschlossenen Fahrzeug durchgeführt werden.

4. Verfahren zur Vorbereitung des Saftes für die Weinherstellung gemäß einem der vorangegangenen Ansprüche,
dadurch gekennzeichnet,
daß das Fressen während des Transports mit einem Druck zwischen 2.10⁴ und 6.10⁴ Pa durchgeführt wird.

5. Transport- und Preßfahrzeug zur Durchführung des Verfahrens gemäß einem der vorangegangenen Ansprüche,
dadurch gekennzeichnet,
daß es aus einem Gestell mit Rädern (2, 3) besteht, welches einen Behälter trägt mit zwei Kammern (8, 9) und einem Trenngitter zur Trennung des Leseguts von dem Saft, wobei die Kammer für das Lesegut (8) nach ihrem Befüllen von einer einen luftdichten Verschluß dieser Kammer gewährleistenden Membran (14) abgedeckt wird und Mittel aufweist, um einen Druckunterschied zwischen ca. 2.10⁴ und 6.10⁴ Pa zwischen der Kammer (8) für das Lesegut und der Kammer (9) für den Saft zu erzeugen, sowie Mittel zur Gewährleistung eines luftdichten Verschlusses der Füllöffnung der Kammer für das Lesegut.

6. Transport- und Preßfahrzeug gemäß Anspruch 5,
dadurch gekennzeichnet,
daß die zum Pressen der Trauben vorgesehene Kammer (8) nach deren Befüllen mittels einer Membran (14) abgedeckt wirt, welche den luftdichten Verschluß dieser Kammer (8) gewährleistet.

7. Transport- und Preßfahrzeug gemäß Anspruch 6,
dadurch gekennzeichnet,
daß es eine Unterdruckpumpe aufweist, um einen Unterdruck in der für die Aufnahme des Saftes vorgesehenen Kammer (9) zu erzeugen.

8. Transport- und Preßfahrzeug gemäß einem der Ansprüche 6 oder 7,
dadurch gekennzeichnet,
daß die für das Pressen vorgesehene Kammer (8) nach deren Befüllen zusätzlich zu der genannten Membran mit einem starren Deckel zugedeckt wird und daß sie einen Kompressor zum Einblasen von Preßluft zwischen die Membran und den starren Deckel aufweist.

9. Transport- und Preßfahrzeug gemäß Anspruch 8,
dadurch gekennzeichnet,
daß der starre Deckel relativ zu einem der oberen Ränder des genannten Behälters aufklappbar ist.

10. Transport- und Preßfahrzeug gemäß einem der Ansprüche 5 bis 9,
dadurch gekennzeichnet,
daß das Trenngitter (7) mit Bezug auf die zur Aufnahme des Leseguts vorgesehenen Kammer konkav ausgebildet ist.
